# EUROPEAN PATENT APPLICATION

(11) **EP 2 174 909 A1**
(43) Date of publication of application: **14.04.2010**
(21) Application number: 08166001.1
(22) Date of filing: 07.10.2008
(51) Int. Cl.: C01B 13/36, C01F 5/02, C01F 7/00, C01G 49/00

(54) **Composition comprising a layered double hydroxide**

(71) Applicant: Akzo Nobel N.V., 6824 BM Arnhem (NL)
(72) Inventor: Schomaker, Elwin, NL-6828 EH, Arnhem (NL); Beijers, Gerard Henk, NL-7009 LA, Doetinchem (NL)
(74) Representative: Schalkwijk, Pieter Cornelis

(57) **Abstract**

Composition comprising (i) a layered double hydroxide containing charge-balancing anions and (ii) one or more organic compounds that are capable of adsorbing to and/or reacting with an inorganic alkaline surface, wherein at least part of said organic compound(s) does not serve as said charge-balancing anions.

The presence of said organic compound reduces or even prevents discoloration of LDH-containing polymeric matrices.

## Description

The present invention relates to a composition comprising a layered double hydroxide and its use for various purposes, including its incorporation in a polymer.

Compositions comprising a polymer and a layered double hydroxide are known in the art. For instance, WO 2007/065861 discloses a nanocomposite material comprising a layered double hydroxide in a polymeric matrix.
Unfortunately, when such compounds are submitted to higher temperatures, e.g. a few hours at 150°C, they strongly discolorate, which is evidently undesired.

It has now been found that this discoloration can be reduced or even prevented by adding an additive to said composition that is capable of adsorbing to and/or reacting with inorganic alkaline surfaces.

The invention therefore relates to a composition comprising:
(i) a layered double hydroxide containing charge-balancing anions and
(ii) one or more organic compounds that are capable of adsorbing to and/or reacting with an inorganic alkaline surface,
wherein at least part of said organic compound(s) does not serve as said charge balancing anions.

Without being bound to theory, it is expected that said organic compounds interact with the edges of the LDH platelets, thereby reducing the accessibility of these edges. As a result, clustering of the LDH platelets is inhibited, the catalytic activity of the edges is reduced, and the delamination of the LDH platelets is improved.

Further, if said organic compound contains a reactive group, e.g. a C=C double bond, a thiol, or an amine, the organic compound is capable of linking the LDH to a polymeric matrix, leading to polymer-LDH composites with favorable properties.

In order to determine whether or not an organic compound is capable of adsorbing to and/or reacting with an inorganic alkaline surface, the following test can be performed:
Take 10 grams of brucite (MgOH), dried in vacuum at 100°C, and disperse said brucite in 50 ml of xylene. Add the organic compound to said dispersion in an amount of 0.01 millimole per m² of the total brucite BET surface present, stir for 1 hour, then add 50 ml water, stir for another 5 minutes, and let the phases separate.
An organic compound is regarded as capable of adsorbing to and/or reacting with inorganic alkaline surfaces if more than 67% of the brucite has remained in the xylene phase.

At least part of the organic compound(s) that is present in the composition according to the present invention does not serve as said charge-balancing anions. Instead, it is theorized that at least part of said compounds will link to the edges of the LDH platelets, which are highly accessible alkaline sites. If at least part of the organic compound(s) does not serve as charge balancing anions, but instead links to the edges of the LDH platelets. Hence, the fact that at least part of the organic compound(s) does not serve as charge-balancing anions can be detected as follows: upon addition of the organic compound to an aqueous LDH slurry, the pH decreases by a value of at least 1, which indicates blocking of basic sites instead of intercalation.

Examples of compounds that are capable of adsorbing to and/or reacting with an inorganic alkaline surface are n,(n+1)-dicarboxylic acids or their anhydrides (e.g. alkenyl succinic anhydrides), n,n-dicarboxylic acids or their anhydrides, n,(n+2)-dicarboxylic acids or their anhydrides, alkyl ketene dimers, sulphonic acids, phosphonic acids, silanes, aluminates, titanates, and zirconates. More preferred organic compounds are n,(n+1)-dicarboxylic acids or their anhydrides and alkyl ketene dimers. Even more preferred are alkenyl succinic anhydrides.

Examples of n,(n+1)-dicarboxylic acids or their anhydrides are alkenyl succinic anhydrides, alkenyl butanedioic acids, 4-(4-methyl n-pentyl)-cyclohexane-1,2-dioic acid anhydride, 1,2-naphthalenedicarboxylic acid, benzene-1,2-dicarboxylic acid, 1,2-Cyclohexanedicarboxylic, cyclohexene 1,2 dicarboxylic acid 1,2-hexanedicarboxylic acid, 3,4-toluenedicarboxylic acid, 3,4-benzophenonedicarboxylic acid, 3,4-biphenyldicarboxylic acid, imidazole-4,5-dicarboxylic acid, 1,2,3-triazole-4,5-dicarboxylic acid, 1-cyclopentene-1,2-dicarboxylic anhydride, 1-cyclopentane-1,2-dicarboxylic anhydride, phtalic anhydride, fluorophthalic anhydride, chlorophthalic anhydride, 3,4,5,6-tetrahydrophthalic anhydride, citraconic anhydride, methyl-5-norbornene-2,3-dicarboxylic anhydride, 2,3-norbornanedicarboxylic acid, 4-methyl-cyclohex-4-ene-1,2-dicarboxylic acid, bicyclo(2.2.1)heptane-3,4-dicarboxylic acid, oxirane-2,3-dicarboxylic acid, succinic acid, methylsuccinic acid, dimethylsuccinic acid, chlorosuccinic acid maleic acid, dimethylmaleic acid itaconic acid, 4-methyl itaconic acid aspartic acid, malic acid, n-methyl-1-aspartic acid, citramalic acid, tartaric acid, mercaptosuccinic acid, 2-ethyl-2-methylsuccinic acid, 2,3-piperidinedicarboxylic acid, trimellitic acid, aconitic acid, 1,1,2-ethanetricarboxylic acid , 2,3-diaminosuccinic acid, threo-beta-hydroxyaspartic acid, and dimethyl cis-1,2,3,6-tetrahydrophthalate.
Of these compounds, alkenyl succinic anhydrides, alkenyl butanedioic acids, chlorosuccinic acid maleic acid, dimethylmaleic acid itaconic acid, 4-methyl itaconic acid aspartic acid, n-methyl-1-aspartic acid, citramalic acid, tartaric acid, mercaptosuccinic acid, 2,3-piperidinedicarboxylic acid, trimellitic acid, aconitic acid, 1,1,2-ethanetricarboxylic acid , 2,3-diaminosuccinic acid, threo-beta-hydroxyaspartic acid, and dimethyl cis-1,2,3,6-tetrahydrophthalate contain reactive groups that are capable to link an LDH with a polymer matrix.

Examples of n,n-dicarboxylic acids or their anhydrides are malonic acid, alkyl malonic acid (e.g. methylmalonic acid or ethyl malonic acid), allylmalonic acid, di-alkyl malonic acids (e.g. dimethylmalonic acid), dimethyl ethylidenemalonate, dimethyl chloromalonate, (2-cyclopenten-1-yl)-malonic acid, 3-thiophenemalonic acid, gamma-carboxy-glutamic acid , 2-(2-cyclohexen-1-yl)-2-methylmalonic acid, 2-acetamido-2-allylmalonic acid, 2-(2-phenylethyl)malonic acid, and citric acid.
Of these compounds, allylmalonic acid, ethylidenemalonate, dimethyl chloromalonate, (2-cyclopenten-1-yl)-malonic acid, 3-thiophenemalonic acid, gamma-carboxy-glutamic acid, 2-(2-cyclohexen-1-yl)-2-methylmalonic acid, 2-acetamido-2-allylmalonic acid, and citric acid contain reactive groups that are capable to link an LDH with a polymer matrix.

Examples of n,(n+2)-dicarboxylic acids or their anhydrides are glutaric acids, alkyl glutaric acids (e.g. methyl gluratic acid or ethyl glutaric acid), di-alkyl glutaric acids (e.g. dimethyl glutaric acid, diethyl glutaric acid, or methyl ethyl glutaric acid), 1,3-cyclohexanedicarboxylic acid, 3,3-tetramethyleneglutaric acid, glutamic acid, methylglutamic acid, 3-hydroxy-3-methylglutaric acid, 2,4-diamino-pentanedioic acid, 1-amino-cis-cyclopentane-1,3-dicarboxylic acid, isocitric acid lactone, tricarballylic acid, 2,3,4-trihydroxy-pentanedioic acid, n-acetyl-glutamic acid, 1,2,4-butanetricarboxylic acid, n-carbamyl-glutamic acid, gamma-carboxy-glutamic acid, and cyclohexanediacetic acid.
Of these compounds, glutamic acid, methylglutamic acid, 3-hydroxy-3-methylglutaric acid, 2,4-diamino-pentanedioic acid, 1-amino-cis-cyclopentane-1,3-dicarboxylic acid, isocitric acid lactone, tricarballylic acid, 2,3,4-trihydroxy-pentanedioic acid, n-acetyl-glutamic acid, 1,2,4-butanetricarboxylic acid, n-carbamyl-glutamic acid, gamma-carboxy-glutamic acid, and cyclohexanediacetic acid contain reactive groups that are capable to link an LDH with a polymer matrix.

Alkenyl succinic anhydrides (ASA) and their corresponding diacid-forms - i.e. the butanedioic acid forms - are preferred organic compounds for use in the present invention. ASAs are the reaction products of a long chain olefin - either lineair or branched - and maleic acid and therefore contain one or two hydrophobic chain(s) and a hydrophilic anhydride group.
Examples of ASAs that can be used as organic compound in the composition of the present invention are tetrapropenylsuccinic anhydride, decenylsuccinic anhydride, undecenylsuccinic anhydride dodecenylsuccinic anhydride, hexadecenylsuccinic anhydride, octadecenylsuccinic anhydride, and eicosenylsuccinic anhydride, and mixtures of the foregoing.

Alkyl ketene dimers are waxy materials which can be synthesized by reacting fatty acid chlorides, generally C₈-C₃₂ fatty acid chlorides, with tertiary amines. Like ASAs, they also contain hydrophobic chains and a hydrophilic group.

Suitable phosphonic and sulphonic acids preferably contain alkyl or hydroxyalkyl groups with 1-50 carbon atoms or aryl or hydroxyl aryl groups with 6-12 carbon atoms. An examples of a suitable phosphonic acid is 1-hydroxzydodecane-1,1-diphosphonic acid.

Examples of suitable silanes are tributyl methoxy silane, dibutyl dimethoxy silane, butyl trimethoxy silane, dodecyl trimethoxy silane, trimethyl chlorosilane, tributyl chlorosilane, dimethyl dichlorosilane, dibutyl dichlorosilane, methyl trichlorosilane, butyl trichlorosilane, octyl trichlorosilane, dodecyl trichlorosilane, methyl trimethoxy silane (Dynasylan^{®} MTMS), methyl triethoxy silane (Dynasylan^{®} MTES), propyl trimethoxy silane (Dynasylan^{®} PTMO), propyl triethoxy silane (Dynasylan^{®} PTEO), isobutyl trimethoxy silane (Dynasylan^{®} IBTMO), isobutyl triethoxy silane (Dynasylan^{®} IBTEO), octyl trimethoxy silane (Dynasylan^{®} OCTMO), octyl triethoxy silane (Dynasylan^{®} OCTEO), hexadecyl trimethoxy silane (Dynasylan^{®} 9116), phenyl trimethoxy silane (Dynasylan^{®} 9165), phenyl triethoxy silane (Dynasylan^{®} 9265) 3-glycidyloxypropyl trimethoxy silane (Dynasylan^{®} GLYMO), glycidyloxypropyl triethoxy silane (Dynasylan^{®} GLYEO), 3-mercaptopropyl trimethoxy silane (Dynasylan^{®} MTMO), 3-mercaptopropyl methyl dimethoxy silane (Dynasylan^{®} 3403), 3-methacryloxypropyl trimethoxy silane (Dynasylan^{®} MEMO), vinyl triethoxy silane (Dynasylan^{®} VTEO), vinyl trimethoxy silane (Dynasylan^{®} VTMO), vinyl tris(2-methoxyethoxy)silane (Dynasylan^{®} VTMOEO), acetoxy propyl trimethoxy silane, methyl triacetoxy silane, 3-acryloxy propyl trimethoxy silane, 3-acryloxypropyl dimethyl methoxy silane, allyl trimethoxy silane, allyl triethoxy silane, dimethyl diethoxy silane, dimethyl dimethoxy silane, dimethyl ethoxy silane, n-hexadecyl triethoxy silane, 3-mercaptopropyl triethoxy silane, methyl dodecyl diethoxy silane, methyl-n-octadecyl diethoxy silane, methyl phenyl diethoxy silane, methyl phenyl dimethoxy silane, n-octadecyl triethoxy silane, n-octadecyl trimethoxy silane, phenyl dimethyl ethoxy silane, phenyl trimethoxy silane, trimethyl ethoxy silane, trimethyl methoxy silane, vinyl methyl diethoxy silane, octanethioic acid, S-(triethoxysilyl) propyl ester, bis(3-triethoxysilylpropyl) tetrasulfide (Si69® ex Degussa), bis(3-triethoxysilylpropyl) disulfide, gammamercaptopropyl trimethoxysilane (SiSiB^{®} PC2300 ex PCC), gammamercaptopropyl triethoxysilane, 3-octanoylthio-1-propyltriethoxy silane (NXT^{™} ex GE),bis(2-hydroxyethyl)-3-aminopropyl-triethoxy silane, 1,2-bis(trimethoxysilyl)ethane, bis(trimethoxyl silyl ethyl)benzene, 1,6-bis(trimethoxyl silyl)hexane, and oligomers such as vinyl trimethoxy silane oligomer (Dynasylan^{®} 6490) and vinyl trimethoxy silane oligomer (Dynasylan^{®} 6498).

Examples of suitable titanates are isopropyl isostearoyl titanate, isopropyl dimethacryl triisostearoyl titanate, isopropyl dimethacryl isostearoyl titanate, tetraisopropyl di((dioctyl) phosphito) titanate, tetra(2,2-diallyloxymethyl)butyl di((ditridecyl) phosphito) titanate, isopropyl tri((dioctyl) pyrophosphate) titanate, isopropoxy triisostearoyl titanate, di((dioctyl) pyrophosphate) oxoethylene titanate, di((dioctyl) phosphate) ethylene titanate, di((dioctyl) pyrophosphate) ethylene titanate, tetraoctyl titanate di(ditridecyl) phosphite, titanium(IV) 2,2-(bis 2-propenolatomethyl) butanolato, tris(dioctyl) pyrophospato-O, and dialkoxy bis(triethanolamine) titanate.

Examples of suitable aluminates are diisopropyl acetoalkoxy aluminate, isopropyl diisostearoyl aluminate, and isopropyl dioctyl phosphate aluminate.

Examples of suitable zirconates are isopropyl triisostearoyl zirconate, butyl triisostearoyl zirconate, butyl trioleyl zirconate, isopropyl trilinoleyl zirconate, di(cumyl)phenyl oxoethylene zirconate, di(cumyl)phenyl dibutyl zirconate, and tri(cumyl)phenyl propyl zirconate.

The organic compound is preferably present in the composition according to the present invention in an amount of 0.1 to 20 wt%, more preferably 0.5 to 10 wt%, and even more preferably 1 to 5 wt%, based on the weight of LDH.

The layered double hydroxide present in the composition according to the present invention has a layered structure corresponding to the general formula:

[Mₘ²⁺Mₙ³⁺(OH)₂ₘ₊₂ₙ]X_{n/z}^{z-}·bH₂O (I)

wherein M²⁺ is a divalent metal ion such as Zn²⁺, Mn²⁺, Ni²⁺, Co²⁺, Fe²⁺, Cu²⁺, Sn²⁺, Ba²⁺, Ca²⁺, and Mg²⁺, most preferably Mg²⁺; M³⁺ is a trivalent metal ion such as Al³⁺, Cr³⁺, Fe³⁺, Co³⁺, Mn³⁺, Ni³⁺, Ce³⁺, and Ga³⁺, most preferably Al³⁺; m and n have a value such that m/n = 1 to 10, preferably 1 to 6, more preferably 2 to 4, and most preferably 2-3; b has a value in the range of from 0 to 10, preferably 2 to 6; and X- is a charge-balancing anion.

Examples of suitable charge-balancing anions are carbonate, hydroxyl, nitrate, chloride, bromide, sulfate, bisulfate, phosphate, organic anions, and combinations thereof. Hydroxyl, carbonate and organic anions are preferred. Because the LDH has a layered structure, the charge-balancing anions may be situated in the interlayer, on the edges, or on the outer surface of the stacked LDH layers. The anions situated in the interlayer of stacked LDH layers are referred to as intercalating anions. LDHs containing charge-balancing organic anions are rendered organophilic and are also referred to as "organoclays".

The LDH-containing composition according to the present invention may be dispersed, delaminated and/or exfoliated in a polymeric matrix. Within the context of the present specification the term "delamination" is defined as reduction of the mean stacking degree of the LDH particles by at least partial de-layering of the LDH structure, thereby yielding a material containing significantly more individual LDH sheets per volume. The term "exfoliation" is defined as complete delamination, i.e. disappearance of periodicity in the direction perpendicular to the LDH sheets, leading to a random dispersion of individual layers in a medium, thereby leaving no stacking order at all.
Swelling or expansion of the LDHs, also called intercalation of the LDHs, can be observed with X-ray diffraction (XRD), because the position of the basal reflections - i.e. the d(*00l*) reflections - is indicative of the distance between the layers, which distance increases upon intercalation. Reduction of the mean stacking degree can be observed as a broadening, up to disappearance, of the XRD reflections or by an increasing asymmetry of the basal reflections (*00*/). Characterization of complete delamination, i.e. exfoliation, remains an analytical challenge, but may in general be concluded from the complete disappearance of non-(*hk0*) reflections from the original LDH. The ordering of the layers and, hence, the extent of delamination, can further be visualized with transmission electron microscopy (TEM).

In one embodiment of the invention, the LDH comprises hydroxyl as charge-balancing anion. This LDH can have only hydroxyl as charge-balancing anion, or a combination of hydroxyl with at least one inorganic and/or organic anion as indicated above. The presence of hydroxyl as charge-balancing anion allows for improved vulcanization properties of the LDH compared to other LDHs.
Generally, at least 10% of the total amount of charge-balancing ions in the LDH present in the composition according to the invention is hydroxyl, preferably at least 30%, more preferably at least 60%, and most preferably at least 90% of the total amount of charge-balancing anions is hydroxyl. In addition to hydroxyl ions, the LDH may comprise carbonate and/or organic anions as charge balancing anions. An LDH comprising both hydroxyl and carbonate as charge-balancing anions can be prepared, for instance, by drying of an aqueous slurry of an LDH comprising hydroxyl in the presence of air or carbon dioxide.

In another embodiment of the invention, the LDH comprises one or more charge-balancing organic anions. These charge-balancing organic anions can be any organic anion known in the art. The organic anion generally has at least 2 carbon atoms, preferably at least 6 carbon atoms, even more preferably at least 8 carbon atoms, and most preferably at least 10 carbon atoms, and generally at most 1,000 carbon atoms, preferably at most 500 carbon atoms, and most preferably at most 100 carbon atoms. The distance between the individual LDH layers in such an organoclay is generally larger than the distance between the layers of a conventional LDH that does not contain organic anions. Preferably, the distance between the layers in the LDH present in the composite according to the invention is at least 1.0 nm, more preferably at least 1.5 nm, and most preferably at least 2 nm. The distance between the individual layers can be determined using X-ray diffraction.
Suitable organic anions include mono-, di- or polycarboxylates, sulfonates, phosphonates, nitrates, borates, phosphates, thiols, malonates, and sulfates. It is envisaged to use two or more organic anions.
Preferred examples of organic anions of the invention are monocarboxylic acids such as fatty acids and rosin-based ions. Particularly preferred organic anions are fatty acids having from 8 to 22 carbon atoms. Suitable examples of such fatty acids are caprylic acid, capric acid, lauric acid, myristic acid, palmitic acid, stearic acid, arachidic acid, decenoic acid, palmitoleic acid, oleic acid, linoleic acid, linolenic acid, and mixtures thereof.
Another preferred organic anion is rosin. Rosin is derived from natural sources, is readily available, and is relatively cheap compared to synthetic organic anions. Typical examples of natural sources of rosin are gum rosin, wood rosin, and tall oil rosins. Rosin commonly is a mixture of a wide variety of different isomers of monocarboxylic tricyclic rosin acids usually containing about 20 carbon atoms. The tricyclic structures of the various rosin acids differ mainly in the position of the double bonds. Typically, rosin is a mixture of substances comprising levopimaric acid, neoabietic acid, palustric acid, abietic acid, dehydroabietic acid, seco-dehydroabietic acid, tetrahydroabietic acid, dihydroabietic acid, pimaric acid, and isopimaric acid. Rosin derived from natural sources also includes rosins, i.e. rosin mixtures, modified notably by polymerization, isomerization, disproportionation, hydrogenation, and Diels-Alder reactions with acrylic acid, anhydrides, and acrylic acid esters. The products obtained by these processes are referred to as modified rosins. Natural rosin may also be chemically altered by any process known in the art, such as for example reaction of the carboxyl group on the rosin with metal oxides, metal hydroxides or salts to form rosin soaps or salts (so-called resinates). Such chemically altered rosins are referred to as rosin derivatives. Such rosin can be modified or chemically altered by introducing an organic group, an anionic group or a cationic group. The organic group may be a substituted or unsubstituted aliphatic or aromatic hydrocarbon having 1 to 40 carbon atoms. The anionic group may be any anionic group known to the man skilled in the art, such as a carboxylate or a sulfonate.
Further details of these rosin-based materials can be gleaned from D.F. Zinkel and J. Russell (in Naval Stores, production-chemistry-utilization, 1989, New York, Section II, Chapter 9), and J.B. Class ("Resins, Natural," Chapter 1: "Rosin and Modified Rosins," Kirk-Othmer Encyclopedia of Chemical Technology, online posting date: December 4, 2000).

Further preferred organic anions are those having a first functional group and a second functional group. The first functional group is an anionic group capable of interacting with the LDH. Examples of such first functional groups are carboxylate, sulfate, sulfonate, nitrate, borate, phosphate, and phosphonate. The second functional group is capable of forming a chemical link with a polymer, optionally in conjunction with sulfur-containing vulcanization agents or peroxides. Examples of such second functional groups are acrylate, methacrylate, hydroxyl, chloride, bromide, amine, epoxy, thiol, vinyl, di- and polysulfides, carbamate, ammonium, sulfonic, sulfinic, sulfonium, phosphonium, phosphinic, isocyanate, hydride, imide, nitrosobenzyl, dinitrosobenzyl, phenol, acetoxy, and anhydride. Suitable examples of organic anions in accordance with this embodiment include 8-amino octanoic acid, 12-amino dodecanoic acid, 3-(acryloyloxy) propanoic acid, 4-vinyl benzoic acid, 8-(3-octyl-2-axiranyl) octanoic acid, and unsaturated fatty acids such as oleic acid and linoleic acid.

The amount of LDH in compositions according to the present invention containing a polymer is preferably 0.01-75 wt%, more preferably 0.05-60 wt%, and most preferably 0.1-50 wt%, based on the total weight of the composition. It is possible to use a combination of two or more different LDHs in the composition.
LDH amounts of 10 wt% or less, preferably 1-20 wt%, more preferably 1-10 wt%, and most preferably 1-5 wt% are especially advantageous for the preparation of polymer-based nanocomposites, i.e. compositions according to the invention that contain delaminated - up to exfoliated - organically modified LDH.
LDH amounts of 20-70 wt%, more preferably 20-50 wt%, are especially advantageous for the preparation of so-called masterbatches, i.e. highly concentrated additive premixes for, e.g., polymer compounding. Although the clay in such masterbatches in general is not completely delaminated and/or exfoliated, further delamination and/or exfoliation may be reached at a later stage, if so desired, when blending the masterbatch with a further polymer to obtain true polymer-based nanocomposites.

The polymer that can be suitably used in these compositions can be any polymer known in the art. In this specification, the term "polymer" refers to an organic substance of at least two building blocks (i.e. monomers), thus including oligomers, copolymers, and polymeric resins. Suitable polymers are both polyadducts and polycondensates. The polymers may further be homopolymers or copolymers.
Examples of suitable polymers are polyolefins, such as polyethylene or polypropylene, vinyl polymers, such as polystyrene, polymethyl methacrylate, polyvinyl chloride, polyvinylidene chloride or polyvinylidene fluoride, saturated polyesters, such as polyethylene terephthalate, polylactic acid, or poly(ε-caprolactone), unsaturated polyester resins, acrylate resins, methacrylate resins, polyimides, epoxy resins, fenol formaldehyde resins, urea formaldehyde resins, melamine formaldehyde resins, polyurethanes, polycarbonates, polyaryl ethers, polysulfones, polysulfides, polyamides, polyether imides, polyether esters, polyether ketones, polyether ester ketones, polysiloxanes, polyurethanes, polyepoxides, and blends of two or more polymers. Preferably used are polyolefins, vinyl polymers, polyesters, polycarbonates, polyamides, polyurethanes or polyepoxides
Particularly preferred are polymers or copolymers obtainable by polymerization of at least one ethylenically unsaturated monomer. Examples of such polymers are polyolefins and vinyl polymers. The polyolefin or vinyl polymer can be a homopolymer or a copolymer. Suitable examples of such polymers are polyethylene, polypropylene, polybutylene, polystyrene, polyvinyl chloride, polyvinylidene chloride, and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, and mixtures thereof. Even more preferred polymers are polyethylene, polypropylene, polystyrene, and polyvinyl chloride.
Specific examples of polyethylene are high-density polyethylene, low-density polyethylene, straight chain low-density polyethylene, ultra-low-density polyethytlene, and ultra-high-molecular weight polyethylene. Examples of ethylene-based copolymers are ethylene-vinyl acetate copolymer (EVA), ethylene-ethyl acrylate copolymer (EEA), ethylene-methyl acrylate copolymer (EMA), and ethylene-acrylic acid copolymer (EAA). A specific example of a polypropylene is a so-called thermoplastic polyolefin (TPO), which include blends or reactor grades of polypropylene and EPR rubber.

The composition of the present invention may further comprise additional components that are commonly used in polymer-LDH compositions. Examples of such additives are pigments, dyes, UV-stabilizers, heat-stabilizers, antioxidants, fillers (such as talc, chalk, lime, hydroxyapatite, silica, carbon black, glass fibres, natural and synthetic fibres, and other inorganic materials), flame retardants, nucleating agents, impact modifiers, plasticizers, rheology modifiers, cross-linking agents, coupling agents, and degassing agents.
These optional addenda and their corresponding amounts can be chosen according to need.

The composition of the present invention comprising a polymer can be prepared according to any method known to a person skilled in the art, for instance by intimately mixing the polymer, the LDH, and the organic compound by using melt-blending techniques. This method is preferred, as it is simple, cost-effective, and readily applicable in existing plants. It is also envisaged to prepare the LDH in the presence of the polymer, or in the presence of the monomers and/or oligomers before, while or after the monomers and/or oligomers are polymerized to form the polymer, followed by addition of the organic compound.

The composition according to the present invention can be used in various applications, such as carpeting, automobile parts, container closures, lunch boxes, closures, medical devices, household articles, food containers, dishwashers, outdoor furniture, blow-moulded bottles, disposable non-woven fabrics, cables and wires, and packaging.

The composition according to the invention can be suitably applied in tyre manufacture such as in green tyres, truck tyres, off-the-road tyres and aircraft tyres, and winter tyres, but also in latex products including gloves, condoms, balloons, catheters, latex thread, foam, carpet backings, and rubberized coir and hair, in footwear, in civil engineering products such as bridge bearings, in rubber-metal-laminated bearings, in belting and hoses, in non-tyre automotive applications including engine mounts, rubber bearings, seals, grommets, washers and boots, in wires and cables, and in pipe seals, medical closures, rollers, small solid tyres, mountings for domestic and commercial appliances, rubber balls and tubing, milking inflations and other agricultural-based applications.

If the rubber is a silicone rubber, the composition of the present invention can suitably be applied in coating products, including pressure-sensitive adhesives, plastic hardcoats, and paper release coatings, in fibre finishing applications including textile and hair care applications, in sealants, adhesives, encapsulants, solar cell units, tubes, strips, solid cords, custom profiles, "O" Rings, cooking, baking, and food storage products, apparel, undergarments, sportswear, footwear, electronics, and home repair products.

## Claims

1. Composition comprising:
(i) a layered double hydroxide containing charge-balancing anions and
(ii) one or more organic compounds that are capable of adsorbing to and/or reacting with an inorganic alkaline surface,
wherein at least part of said organic compound(s) does not serve as said charge-balancing anions.

2. Composition according to claim 1 wherein said organic compound that is capable of adsorbing to and/or reacting with inorganic alkaline surfaces is an n,(n+1)-dicarboxylic acid, its anhydride, or an alkyl ketene dimer.

3. Composition according to claim 1 or 2 wherein said organic compound is present in the composition in an amount of 0.1-20 wt%, based on the weight of the layered double hydroxide.

4. Composition according to any one of the preceding claims wherein the polymer is a polyolefin or a vinyl polymer.

5. Composition according to any one of the preceding claims wherein the layered double hydroxide contains at least hydroxyl and/or an organic anion as charge-balancing organic anion(s).

6. Composition according to any one of the preceding claims additionally comprising a polymer.

7. Composition according to claim 6 comprising 1-20 wt% of the layered double hydroxide, based on the total weight of the composition.

8. Composition according to claim 6 comprising 20-70 wt% of the layered double hydroxide, based on the total weight of the composition.

9. Use of a composition according to any one of the preceding claims in carpeting, automobile parts, container closures, lunch boxes, closures, medical devices, household articles, food containers, dishwashers, outdoor furniture, blow-moulded bottles, disposable non-woven fabrics, cables and wires, or packaging.
